(19) Europäisches Patentamt / European Patent Office / Office européen des brevets

(11) **EP 4 260 022 B1**

(12) **EUROPÄISCHE PATENTSCHRIFT**

(45) Veröffentlichungstag und Bekanntmachung des Hinweises auf die Patenterteilung:
**16.04.2025   Patentblatt 2025/16**

(21) Anmeldenummer: **21823215.5**

(22) Anmeldetag: **26.11.2021**

(51) Internationale Patentklassifikation (IPC):
*G01F 23/284* (2006.01)   *G01S 13/88* (2006.01)
*H01Q 1/22* (2006.01)   *G01S 7/02* (2006.01)
*G01S 7/03* (2006.01)   *H01P 1/04* (2006.01)
*H01P 5/02* (2006.01)

(52) Gemeinsame Patentklassifikation (CPC):
**G01F 23/284; G01S 7/027; G01S 7/03; G01S 13/88; H01P 1/042; H01P 5/024; H01Q 1/225**

(86) Internationale Anmeldenummer:
**PCT/EP2021/083095**

(87) Internationale Veröffentlichungsnummer:
**WO 2022/122407 (16.06.2022 Gazette 2022/24)**

(54) **FÜLLSTANDSMESSGERÄT**

LEVEL METER

JAUGE DE NIVEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2020   DE 102020133194**

(43) Veröffentlichungstag der Anmeldung:
**18.10.2023   Patentblatt 2023/42**

(73) Patentinhaber: **Endress+Hauser SE+Co. KG
79689 Maulburg (DE)**

(72) Erfinder:
• **OSSWALD, Dirk
  79650 Schopfheim (DE)**
• **BERGMANN, Eric
  79585 Steinen (DE)**

(74) Vertreter: **Endress + Hauser Group Services (Deutschland) AG+Co. KG
Colmarer Straße 6
79576 Weil am Rhein (DE)**

(56) Entgegenhaltungen:
EP-A2- 2 487 472    WO-A1-2020/120059
US-A- 5 955 684

## Beschreibung

Die Erfindung betrifft ein kompakt und modular auslegbares Füllstandsmessgerät.

In der Prozessautomatisierungstechnik werden zur Erfassung relevanter Prozessparameter entsprechende Feldgeräte eingesetzt. Zwecks Erfassung der jeweiligen Prozessparameter sind in den entsprechenden Feldgeräten daher geeignete Messprinzipien implementiert, um als Prozessparameter etwa einen Füllstand, einen Durchfluss, einen Druck, eine Temperatur, einen pH-Wert, ein Redoxpotential oder eine Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich berührungslose Messverfahren etabliert, da sie robust und wartungsarm sind. Ein weiterer Vorteil berührungsloser Messverfahren besteht in der Fähigkeit, den Füllstand quasi kontinuierlich messen zu können. Im Bereich der kontinuierlichen Füllstandsmessung werden daher vorwiegend Radar-basierte Messverfahren eingesetzt (im Kontext dieser Patentanmeldung bezieht sich der Begriff "Radar" auf Signale bzw. elektromagnetische Wellen mit Frequenzen zwischen 0.03 GHz und 300 GHz). Ein etabliertes Messverfahren bildet hierbei FMCW *("Frequency Modulated Continuous Wave")*. Beschrieben wird das FMCW-basierte Füllstands-Messverfahren beispielsweise in der Offenlegungsschrift DE 10 2013 108 490 A1.

Prinzip-Bedingt ist die Antennen-Anordnung von Radar-basierten Füllstandsmessgeräten mit direktem Kontakt zum Behälter-Inneren anzubringen, da zwischen der Antennen-Anordnung und dem Füllgut keine für Radar-Signale undurchlässige Barriere im Wege stehen darf. Die elektronischen Module des Füllstandmessgerätes, wie das Radarspezifische Hochfrequenz-Modul zur Hochfrequenzsignal-Erzeugung sowie weitere Einheiten zur Daten-Verarbeitung und -Übertragung sind hingegen außerhalb des Behälters in einem separaten Geräte-Gehäuse untergebracht. Denn vor allem zu Explosionsschutz-Zwecken wird oftmals eine räumliche Trennung zwischen den aktiven, also mit Strom versorgten Modulen und der passiven Antennen-Anordnung gefordert. Hierzu umfasst das Geräte-Gehäuse einen Messgeräte-Hals, über den die Antennen-Anordnung mit dem Geräte-Gehäuse mechanisch verbunden ist. Dabei ist in dem Messgeräte-Hals gen Antennen-Anordnung eine entsprechende Explosionsschutz-Barriere angeordnet. Zusätzlich oder alternativ zu Explosionsschutzanforderungen muss der Messgeräte-Hals gegebenenfalls weitere Schutzfunktionen erfüllen: Je nach Anwendung herrschen im Inneren des Behälters hohe Temperaturen, hoher Druck oder gefährliche Gase vor. Daher muss der Messgeräte-Hals je nach Anwendung als Druckdichtung, Temperaturbarriere und/oder als Medien-Abdichtung fungieren.

Damit das Geräte-Gehäuse und die darin befindlichen (Schnittstellen-) Module außer bei Füllstandsmessgeräten auch als Plattform für weitere Feldgeräte-Typen dienen kann, und damit das Geräte-Gehäuse insgesamt kompakter auslegbar ist, kann das für Radar-basierte Füllstandsmessgeräte spezifische Hochfrequenz-Modul in den Messgeräte-Hals ausgelagert werden. Die räumlichen Verhältnisse im Messgeräte-Hals sind aufgrund thermischer und explosionsschutzspezifischer Anforderungen jedoch äußerst begrenzt. Aus diesem Grund ist eine Unterbringung des Radar-spezifischen Hochfrequenz-Moduls im Messgeräte-Hals schwierig. Insbesondere bei modularer Auslegung ist auch die Anbindung des Hochfrequenz-Moduls an die Antennen-Anordnung herausfordernd, da die Anbindung lösbar ausgelegt sein muss und etwaige Steckverbindungen zwischen den entsprechenden Wellenleiter-Segmenten die Gefahr von Hochfrequenz-Störungen erhöhen.

Die WO 2020/120059 A1 beschreibt ein radarbasiertes Füllstandsmessgerät gemäß dem Stand der Technik, bei dem ein Wellenleiter-Segment über eine Durchführung über einen Hochfrequenz-Anschluss mit einer Antenne verbunden ist.

Der Erfindung liegt daher die Aufgabe zugrunde, ein kompakt und modular auslegbares Füllstandsmessgerät bereitzustellen.

Die Erfindung löst diese Aufgabe durch ein Radar-basiertes Füllstandsmessgerät, das zur Bestimmung eines Füllstandes in einem Behälter dient und folgende Komponenten umfasst:

- Eine über einen hohlleiterförmigen Hochfrequenz-Anschluss ansteuerbare Antennen-Anordnung mittels welcher jeweils ein Radar-Signal gen Füllgut aussendbar ist, und mittels welcher nach Reflektion des Radar-Signals an der Füllgut-Oberfläche jeweils ein entsprechendes Empfangs-Signal empfangbar ist,
- ein Hochfrequenz-Modul, mit

  ◦ einer Sende-/Empfangs-Einheit, die ausgelegt ist, um gemäß eines definierten Messprinzips das Radar-Signal zu erzeugen, und um nach Reflektion des Radar-Signals an der Füllgut-Oberfläche anhand des entsprechenden Empfangs-Signals gemäß des implementierten Messprinzips den Füllstand zu bestimmen, weiterhin mit

  ◦ einer Elektronik-Kapselung, in dem die Sende-/Empfangs-Einheit angeordnet ist, so dass die Sende-/Empfangs-Einheit und das zweite Wellenleiter-Segment zwecks Explosionsschutz innerhalb der Elektronik-Kapselung bis zur Durchführung mittels eines Vergusses umschlossen werden können, und mit

  ◦ einem Wellenleiter-Segment, das zur Übertragung der Radar-Signale derart an die Sende-/Empfangs-Einheit angeschlossen ist, so dass dasWellenleiter-Segment aus der Elektronik-Kapselung hinaus geführt wird,

- ein an die Antennen-Anordnung angrenzendes Geräte-Gehäuse, in dem das Hochfrequenz-Modul angeordnet ist, bzw. in dessen Messgeräte-Hals das Hochfrequenz-Modul angeordnet ist, und
- ein Feder-Element, welches das Hochfrequenz-Modul bzw. die Elektronik-Kapselung derart gegenüber dem Geräte-Gehäuse bzw. dem Messgeräte-Hals vorspannt, dass das hinausgeführte Wellenleiter-Segment mit einer entsprechenden Kraft in Richtung einer gemeinsamen Wellenleiter-Achse gegen den Hochfrequenz-Anschluss gepresst wird. Das Wellenleiter-Segment ist gemäß der vorliegenden Erfindung als Hohlleiter-Segment ausgeführt.

Durch das erfindungsgemäße Feder-Element wird eine spaltfreie und somit störungsarme Anbindung des Hochfrequenz-Moduls an die Antennen-Anordnung über das Wellenleiter-Segment bzw. den korrespondierenden Hochfrequenz-Anschluss gewährleistet, wodurch die modulare Auslegung des Füllstandsmessgerätes vereinfacht wird. Dabei wird die HF-Störanfälligkeit durch das Anpressen reduziert, da die der Hochfrequenz-Anschluss und das Wellenleiter-Segment als Hohlleiter ausgelegt sind. Dabei kann das erfindungsgemäße Prinzip des Anpressens des Wellenleiter-Segments auch dann angewendet werden, wenn zur elektrischen Entkopplung der Antennen-Anordnung zwischen Hochfrequenz-Anschluss und dem Wellenleiter-Segment eine beidseitig formschlüssige, galvanische Trennung angeordnet ist.

Das erfindungsgemäße Anpressen des Elektronik-Moduls wirkt sich insbesondere dann vorteilhaft aus, wenn das Geräte-Gehäuse als thermische Entkopplung zur Antennen-Anordnung hin einen Messgeräte-Hals umfasst. In diesem Fall kann das mit der Antennen-Anordnung zu verbindende Hochfrequenz-Modul - unter der erfindungsgemäßen Vorspannung - im Messgeräte-Hals angeordnet werden. Hierdurch wird einerseits Platz im eigentlichen Geräte-Gehäuse eingespart. Andererseits wird durch diese Auslegung die Länge des Hochfrequenz-Pfades zwischen der Antennen-Anordnung und dem Hochfrequenz-Modul minimiert, so dass hierdurch die HF-Störanfälligkeit im Rahmen der Füllstandsmessung weiter verringert wird.

Im Sinne der Erfindung ist es nicht fest vorgegeben, ob das Hochfrequenz-Modul bzw. dessen Wellenleiter-Segment unter Druck oder unter Zug von dem Feder-Element gegen den Hochfrequenz-Anschluss gepresst wird. Dementsprechend kann das Feder-Element sowohl als Druckfeder, als auch als Zugfeder ausgelegt werden. Sofern das Feder-Element als Druckfeder ausgelegt ist, ist die Druckfeder zum Vorspannen des Hochfrequenz-Moduls innerhalb des Geräte-Gehäuses bzw. innerhalb des Messgeräte-Hals an einer dem Wellenleiter-Segment gegenüberliegenden Außenseite der Elektronik-Kapselung anzuordnen. Sofern das Feder-Element wiederum als Zugfeder ausgelegt ist, muss die Zugfeder zum Vorspannen des Hochfrequenz-Moduls innerhalb des Geräte-Gehäuses bzw. innerhalb des Messgeräte-Hals an einer dem Wellenleiter-Segment zugewandten Außenseite der Elektronik-Kapselung angeordnet werden. Je nach Auslegung kann das Feder-Element also beispielsweise als eine oder mehrere Wellen-Feder(n), Spiral-Feder(n) oder als Teller-Feder(n) ausgelegt werden.

Damit das Hochfrequenz-Modul bei der Fertigung einfach und sicher in das Geräte-Gehäuse bzw. in den Messgeräte-Hals eingesetzt werden kann, bietet es sich an, das Füllstandsmessgerät mit zumindest einem derartigen Führungselement auszulegen, so dass das Hochfrequenz-Modul innerhalb des Geräte-Gehäuses bzw. innerhalb des Messgeräte-Halses entlang der gemeinsamen Wellenleiter-Achse des Hochfrequenz-Anschlusses bzw. des Wellenleiter-Segmentes geführt wird. Hierdurch wird sichergestellt, dass das Wellenleiter-Segment beim Einbau passgenau an den Hochfrequenz-Anschluss andockt.

Unter den Begriffen *"Einheit"* bzw. *"Modul"* wird im Rahmen der Erfindung prinzipiell jede elektronische Schaltung verstanden, die für den angedachten Einsatzzweck, bspw. zur Hochfrequenz-Erzeugung oder als Schnittstelle geeignet ausgelegt ist. Die entsprechende Einheit kann also je nach Anforderung eine Analogschaltung zur Erzeugung bzw. Verarbeitung entsprechender analoger Signale umfassen. Die Einheit kann jedoch auch eine Digitalschaltung, wie ein FPGA oder ein Speichermedium in Zusammenwirken mit einem Programm umfassen. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten bzw. Module des Messgerätes im Sinne der Erfindung potenziell auch auf einen gemeinsamen physikalischen Speicher zurückgreifen bzw. mittels derselben physikalischen Digitalschaltung betrieben werden. Konkret kann die Sende-/Empfangs-Einheit zur Ansteuerung der Antennen-Anordnung über die Wellenleiter beispielsweise auf dem FMCW- oder dem Pulslaufzeit-Verfahren basieren.

Anhand der nachfolgenden Figuren wird die Erfindung näher erläutert. Es zeigt:

Fig. 1: Ein Radar-basiertes Füllstandsmessgerät an einem Behälter,
Fig. 2: eine Querschnittsansicht des erfindungsgemäßen Füllstandsmessgerätes, und
Fig. 3: eine Detail-Ansicht des Füllstandsmessgerätes im Bereich des Wellenleiter-Segmentes.

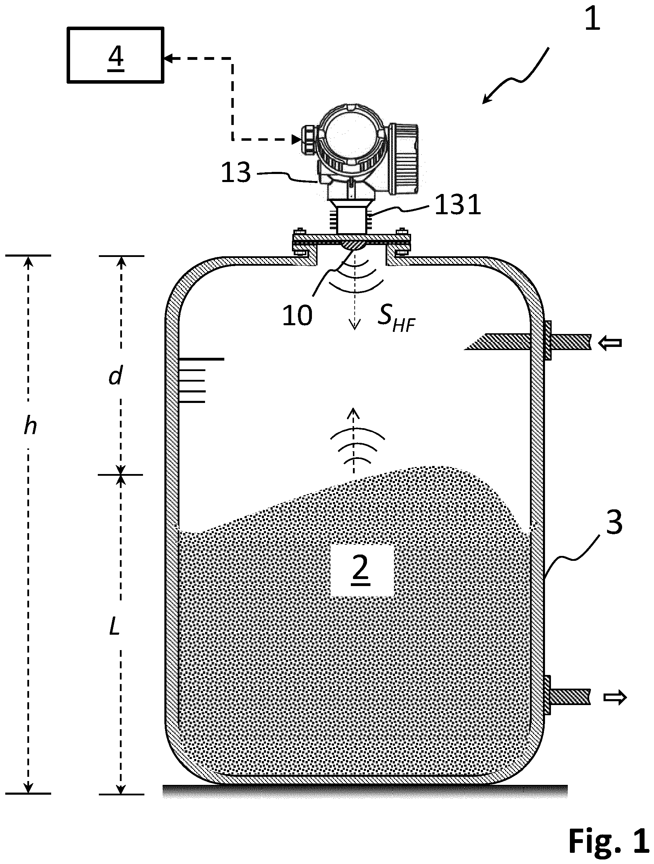

Zum prinzipiellen Verständnis von Radar-basierter Füllstandsmessung ist in Fig. 1 ein Behälter 3 mit einem Füllgut 2 gezeigt, dessen Füllstand L zu bestimmen ist. Dabei kann der Behälter 3 je nach Art des Füllgutes 2 und je nach Einsatzgebiet bis zu mehr als 100 m hoch sein. Von der Art des Füllgutes 2 und dem Einsatzgebiet hängen auch die Bedingungen im Behälter 3 ab. So kann es im Falle von exothermen Reaktionen beispielsweise zu hoher Temperatur- und Druckbelastung kommen. Bei staubhaltigen oder entzündlichen Stoffen sind im Behälter-Inneren entsprechende Explosionsschutzbedingungen einzuhalten.

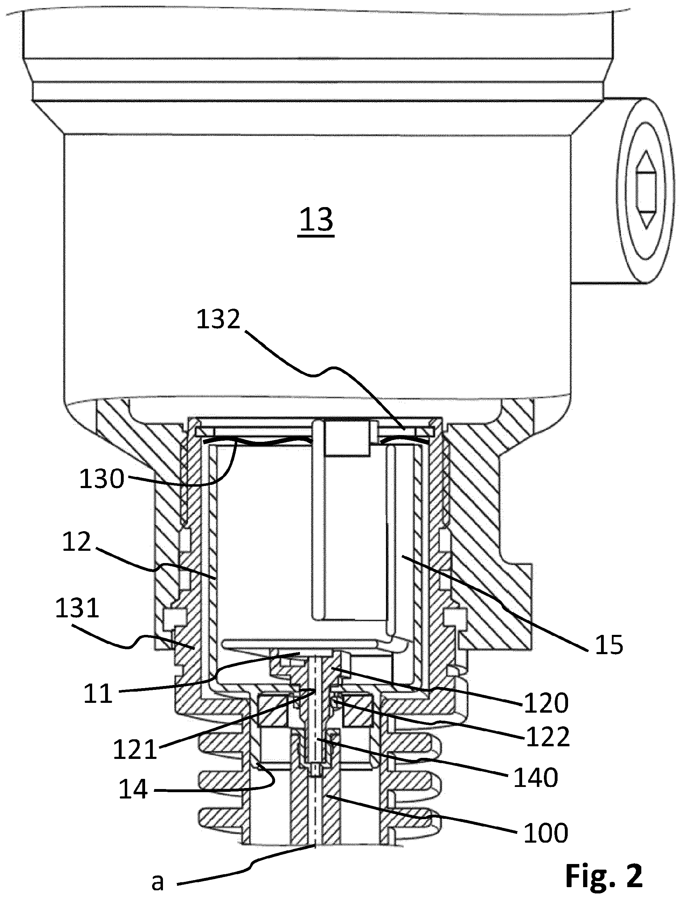

Um den Füllstand L unabhängig von den vorherrschenden Bedingungen ermitteln zu können, ist ein Radar-basiertes Füllstandsmessgerät 1 in einer bekannten Einbauhöhe h oberhalb des Füllgutes 2 am Behälter 3 angebracht. Dabei ist das Füllstandsmessgerät 1 derart an einer entsprechenden (Flansch-) Öffnung des Behälters 3 befestigt bzw. ausgerichtet, dass in den Behälter 3 hinein eine Antennen-Anordnung 10 des Füllstandsmessgerätes 1 vertikal gen Füllgut 2 gerichtet ist. Dabei ist das übrige Geräte-Gehäuse 13 des Füllstandsmessgerätes 1, in dem die elektronischen Komponenten 11 untergebracht sind, außerhalb der Behälter-Durchführung angeordnet. Durch die räumliche Trennung der elektronischen Komponenten 11 im Geräte-Gehäuse 13 von der Antennen-Anordnung 10 bzw. vom Behälter-Inneren durch einen Messgeräte-Hals 131 wird einerseits Explosions-Schutz innerhalb des Behälters 3 gewährleitet. Andererseits werden die elektronischen Komponenten 10 im Geräte-Gehäuse 13 bzw. im Messgeräte-Hals 131 vor Temperatur- und Druck-Belastung aus dem Behälter-Inneren geschützt. Wie in Fig. 1 und Fig. 2 angedeutet ist, weist der Messgeräte-Hals 131 zur thermischen Entkopplung des Geräte-Gehäuses 13 entsprechende Kühlrippen auf.

Durch die Anordnung am Behälter 3 ist es dem Füllstandsmessgerät 1 möglich, über die Antennen-Anordnung 10 Radar-Signale $S_{HF}$ vertikal in Richtung der Oberfläche des Füllgutes 2 auszusenden. Nach Reflektion an der Füllgut-Oberfläche empfängt das Füllstandsmessgerät 1 die reflektierten Radar-Signale $R_{HF}$ wiederum über die Antennen-Anordnung 10. Dabei ist die Signallaufzeit zwischen Aussenden und Empfang des jeweiligen Radar-Signals $S_{HF}$, $R_{HF}$ proportional zum Abstand d zwischen dem Füllstandsmessgerät 1 und dem Füllgut 2, wobei die Signallaufzeit vom Füllstandsmessgerät 1 beispielsweise mittels des FMCW- oder mittels des Pulslaufzeit-Verfahrens bestimmt werden kann. Dementsprechend kann das Füllstandsmessgerät 1 beispielsweise auf Basis einer entsprechenden Kalibration die gemessene Laufzeit dem jeweiligen Abstand d zuordnen. Hierüber kann das Füllstandsmessgerät 1 gemäß

$$d = h - L$$

wiederum den Füllstand L bestimmen, sofern die Einbauhöhe h im Füllstandsmessgerät 1 hinterlegt wird.

In der Regel ist das Füllstandsmessgerät 1 über ein im Geräte-Gehäuse 13 untergebrachtes Schnittstellen-Modul, wie etwa "PROFIBUS", "HART" oder "Wireless HART" mit einer übergeordneten Einheit 4, wie z. B. einem Prozessleitsystem, verbunden. Hierüber kann der Füllstandswert L übermittelt werden, beispielsweise um gegebenenfalls Zu- oder Abflüsse des Behälters 3 zu steuern. Es können aber auch anderweitige Informationen über den allgemeinen Betriebszustand des Füllstandsmessgerätes 1 kommuniziert werden.

Wie in Fig. 2 skizziert ist, wird die Antennen-Anordnung 10 innerhalb des Füllstandsmessgerätes 1 hochfrequenztechnisch von einem Hochfrequenz-Modul 11, 12, 120 angesteuert. Dabei ist in einer entsprechend ausgelegten Sende-/Empfangs-Einheit 11 des Hochfrequenz-Moduls 11, 12, 120 zur Bestimmung der Signallaufzeit anhand des eingehenden Empfangs-Signals $R_{HF}$ beispielsweise das FMCW- oder Pulslaufzeit-Messprinzip implementiert. Außerdem dient die Sende-/Empfangs-Einheit 11 zur Erzeugung des auszusendenden Radar-Signals $S_{HF}$. Hierzu ist die Sende-/EmpfangsEinheit 11 in der gezeigten Ausführungsvariante innerhalb des Messgeräte-Hals 131 bspw. als monolithisch gekapseltes SMD-Bauteil auf einer der Antennen-Anordnung 10 zugewandten Seite einer Leiterplatte angeordnet.

Umschlossen wird die Leiterplatte mitsamt der Sende-/Empfangs-Einheit 11 durch eine Elektronik-Kapselung 12 des Hochfrequenz-Moduls 11, 12, 120. Dabei kann die Elektronik-Kapselung 12 aus einem Kunststoff, wie PC, PE, PP oder PA gefertigt werden. Dies ermöglicht es einerseits, die Leiterplatte mitsamt der Sende-/Empfangs-Einheit 11 zu Explosionsschutzzwecken zusätzlich mittels Vergussmasse zu kapseln (nicht explizit in Fig. 2 dargestellt). Andererseits wird mittels des Hochfrequenz-Moduls 11, 12, 120 die erfindungsgemäße Ankopplung der Sende-/Empfangs-Einheit 11 an die Antennen-Anordnung 10 ermöglicht. Hierzu umfasst die Antennen-Anordnung bei der in Fig. 2 gezeigten Ausführungsvariante als Hochfrequenz-Anschluss 100 ein geradliniges Hohlleiter-Segment 100, über welche die Antennen-Anordnung 10 hochfrequenztechnisch durch das Hochfrequenz-Modul 11, 12, 120 kontaktierbar ist.

Zur Übertragung der Radar-Signale $S_{HF}$, $R_{HF}$ von bzw. zur Sende-/Empfangs-Einheit 11 ist dem Hochfrequenz-Modul 11, 12, 120 ein ebenfalls geradlinig ausgeführtes Hohlleiter-Segment 120 zugeordnet, welches im fertig montierten Zustand des Füllstandsmessgerätes 1 in Bezug zur Leiterplatte orthogonal von der Sende-EmpfangsEinheit 11 gen Hochfrequenz-Anschluss 100 ausgeht. Dabei ist das Hohlleiter-Segment 120 derart über eine Schraubverbindung 122 an einer Durchführung 121 der Elektronik-Kapselung 12 befestigt, dass das Hohlleiter-Segment 120 durch die Wandung der Elektronik-Kapselung 12 hindurch nach außen geführt wird. Hierzu weist das Hohlleiter-Segment 120 um den Hohlraum herum ein in der Hohlleiter-Achse a ausgerichtetes Außengewinde auf, so dass das Hohlleiter-Segment 120 durch eine entsprechende Mutter von der Außenseite gegen die Elektronik-Kapselung 12 gekontert wird, wie es in Fig. 2 der Fall ist. Anstelle der in Fig. 2 gezeigten Schraubverbindung 122 kann das Hohlleiter-Segment 120 auch mit einer alternativen Befestigung entsprechend an der Durchführung der Elektronik-Kapselung 12 befestigt werden, beispielswese mittels Zapfen.

Zudem ist die Leiterplatte, auf dem die Sende-/Empfangs-Einheit 11 innerhalb der Elektronik-Kapselung 12 angeordnet ist, mittels zumindest eines Befestigungsmittels am Hohlleiter-Segment 120 montiert. Dabei kann es sich bei dem Befestigungsmittel um eine Klebe-Verbindung oder wiederum eine Zapfen- oder Schraub-Verbindung handeln. Hierdurch ist die Leiterplatte bzw. die Sende-/Empfangs-Einheit 11 innerhalb der Elektronik-Kapselung 12 freitragend. Das heißt, durch die indirekte Fixierung über das Hohlleiter-Segment 120 erfordert die Sende-/Empfangs-Einheit 11 keine direkte Fixierung zur Elektronik-Kapselung 12 hin. Hierdurch kann die Leiterplatte und damit die Elektronik-Kapselung 12 insgesamt sehr kompakt ausgelegt werden, so dass die Unterbringung des Hochfrequenz-Moduls 11, 12, 120 im Messgeräte-Hals 131 vereinfacht wird.

Wie in Fig. 2 dargestellt ist, können innerhalb der Elektronik-Kapselung 12 des Hochfrequenz-Moduls 11, 12, 120 neben der Sende-/Empfangs-Einheit 11 auch weitere Leiterkarten 15 angeordnet werden. Diese können, wie in der Darstellung gezeigt, elektrisch beispielsweise mittels eines mechanisch flexiblen Kabelbaums mit der Leiterplatte verbunden werden, auf welcher die Sende-/Empfangs-Einheit 11 angeordnet ist. Dabei können die Sende-/Empfangs-Einheit 11 und etwaige weitere Leiterkarten 15 zur Fertigung des Hochfrequenz-Moduls 11, 12, 120 beispielsweise mittels einer Montage-Hilfe, die als Negativ-Form der Sende-/Empfangs-Einheit 11 bzw. der weiteren Leiterkarten 15 ausgelegt ist, von einer der Durchführung 121 abgewandten Seite der Elektronik-Kapselung 12 eingeführt werden.

Im montierten Zustand, also sobald das Hochfrequenz-Modul 11, 12, 120 in den Messgeräte-Hals 131 eingesetzt ist, grenzen der als Hohlleiter ausgelegte Hochfrequenz-Anschluss 100 und das Hohlleiter-Segment 120 des Hochfrequenz-Moduls 11, 12, 120 derart passgenau aneinander (bzw. der Hochfrequenz-Anschluss 100 und das Hohlleiter-Segment 120 grenzen derart passgenau jeweils an eine zwischen ihnen angeordnete galvanische Trennung 140 an), dass die Hohlleiter-Segmente 100, 120 eine gemeinsame Hohlleiter-Achse a ausbilden. Hierdurch wird eine verlustfreie Übertragung der Radar-Signale $S_{HF}$ zwischen der Antennen-Anordnung 10 und der Sende-/Empfangs-Einheit 11 erzielt. Dementsprechend ist das Hochfrequenz-Modul 11, 12, 120 bei der in Fig. 2 gezeigten Ausführungsvariante so ausgelegt, dass die Elektronik-Kapselung 12 beim Einsetzen in den Mesgeräte-Hals 131 (von demjenigen Endbereich, welcher der Antennen-Anordnung 10 abgewandt ist) entsprechend in Richtung der Hohlleiter-Achse a der Hohlleiter-Segmente 100, 120 geführt wird. Hierzu ist in Verlängerung zur Elektronik-Kapselung 12 korrespondierend zur Innenwandung des Messgeräte-Halses 131 in diesem Bereich ein entsprechendes Führungselement 14 radialsymmetrisch um das zweite Hohlleiter-Segment 120 herum ausgebildet.

Die in Fig. 2 gezeigte, optionale galvanische Trennung 140 aus Kunststoff oder Keramik dient dazu, die Antennen-Anordnung 10 elektrisch von der Sende-/Empfangseinheit 11 bzw. von den weiteren elektronischen Komponenten im Geräte-Gehäuse 13 zu entkoppeln. Hierzu ist die galvanische Trennung 140 passgenau zwischen dem Hochfrequenz-Anschluss 100 und dem Hohlleiter-Segment 120 angeordnet, wobei die galvanische Trennung 140 aus einem elektrisch isolierenden Material wie einer Keramik oder einem Kunststoff gefertigt ist und eine zum Innenquerschnitt der Hohlleiter 100, 120 korrespondierende Durchführung aufweist.

Damit der Hochfrequenz-Anschluss 100 der Antennen-Anordnung 10 und das Hohlleiter-Segment 120 des Hochfrequenz-Moduls 1, 12, 120 im eingesetzten Zustand der Elektronik-Kapselung 12 spaltfrei aneinander bzw. an die galvanische Trennung 140 grenzen, drückt erfindungsgemäß ein Feder-Element 130 die Elektronik-Kapselung unter Führung des Führungselementes 14 vom Inneren des Messgeräte-Hals 131 ausgehend derart gen Antennen-Anordnung 10, dass das Hohlleiter-Segment 120 mit der entsprechenden Feder-Kraft gegen den Hohlleiter des Hochfrequenz-Anschlusses 100 gepresst wird. Hierdurch wird wiederum eine verlustfreie Signal-Übertragung gewährleistet. Bei der in Fig. 2 gezeigten Ausführungsvariante ist das Feder-Element 130 als Wellenfeder ausgelegt. Dabei ist die Wellenfeder 130 im Inneren des Messgeräte-Halses 131 zwischen einer Nut bzw. einem Sicherungsring 132 und derjenigen Außenseite der der Elektronik-Kapselung 12, die dem Hohlleiter-Segment 120 abgewandt ist, eingespannt.

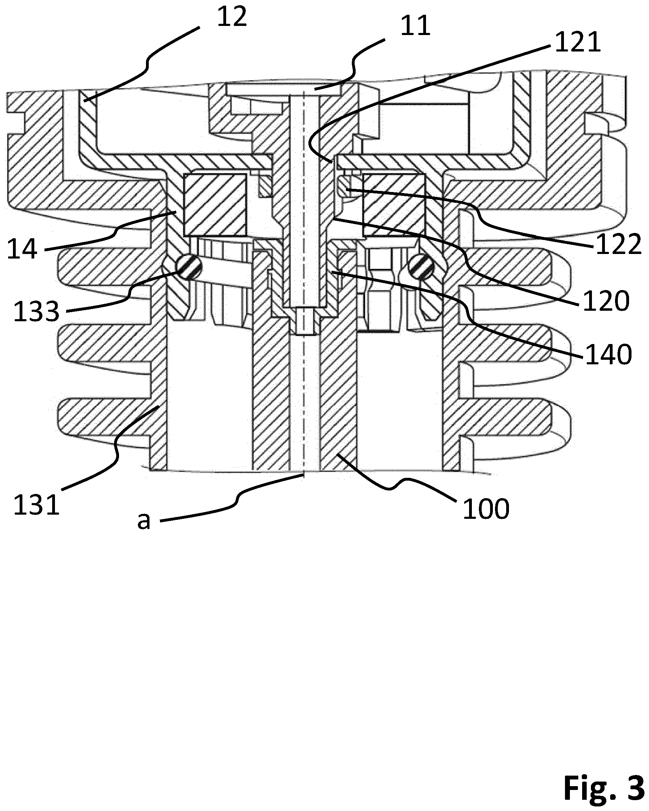

Im Gegensatz zu der in Fig. 2 gezeigten Ausführungsvariante ist es alternativ außerdem denkbar, das Feder-Element 130, 133 als Zugfeder 133 auszulegen und im Geräte-Hals 131 zwischen der Antennen-Anordnung 10 und der Elektronik-Kapselung 12 einzuspannen, um das zweite Wellenleiter-Segment 120 wiederum mit der entsprechenden Feder-Kraft gegen das erste Wellenleiter-Segment 100 zu ziehen. Eine solche Möglichkeit zur erfindungsgemäßen Fixierung des Hochfrequenz-Moduls 11, 12, 120 ist in Fig. 3 veranschaulicht: In der dort gezeigten Ausführungsform ist außenseitig der Elektronik-Kapselung 12 ein Federring 133 auf Höhe des Hohlleiter-Segmentes 120 vorgesehen. Dabei ist der Federring 133 konzipiert, um im eingesetzten Zustand des Hochfrequenz-Moduls 11, 12, 120 in den Messgeräte-Hals 131 derart von innen gegen das Führungselement 14 der Elektronik-Kapselung 12 zu drücken, so dass ein ringförmiger Außenwulst des Führungselementes 14 nach außen in eine entsprechende Nut des Messgeräte-Halses 131 einrastet. Dabei sind die Positionen des Federrings 133, des Außenwulstes und der Nut so weit unten gewählt, dass das Hohlleiter-Segment 120 wiederum mit einer definierten Zugspannung spaltfrei gegen den Hochfrequenz-Anschluss 100 der Antennen-Anordnung 10 gepresst wird.

Unabhängig von der Auslegung des Feder-Elementes 130, 133 als Zugfeder 133 oder als Druckfeder 130 wird durch das Einspannen neben der spaltfreien Abdichtung zwischen den Hohlleitern 100, 120 außerdem bewirkt, dass die Elektronik-Kapselung 12 innerhalb des Messgeräte-Halses 12 fixiert wird. In diesem Zusammenhang kann das erfindungsgemäße Pressen des Hohlleiter-Segmentes 120 gegen den Hochfrequenz-Anschluss 100 auch dann implementiert werden, wenn die Elektronik-Kapselung 12 unmittelbar im Geräte-Gehäuse 13 untergebracht ist. Dies kann der Fall sein, wenn das Geräte-Gehäuse 13 des Füllstandsmessgerätes 1 keinen Messgeräte-Hals 131 umfasst, oder wenn sich der hohlleiterförmige Hochfrequenz-Anschluss 100 durch den gesamten Messgeräte-Hals 131 erstreckt. Außerdem kann das erfindungsgemäße Anpressen der einzelnen Hohlleiter-Segmente 100, 120 auch umgesetzt werden, wenn diese nicht als Hohlleiter, sondern beispielsweise als dielektrische Wellenleiter konzipiert sind.

**Bezugszeichenliste**

| | |
|---|---|
| 1 | Füllstandsmessgerät |
| 2 | Füllgut |
| 3 | Behälter |
| 4 | Übergeordnete Einheit |
| 10 | Antennen-Anordnung |
| 11 | Sende-/Empfangs-Einheit |
| 12 | Elektronik-Kapselung |
| 13 | Geräte-Gehäuse |
| 14 | Führungselement |
| 15 | Leiterkarte |
| 100 | Hochfrequenz-Anschluss |
| 120 | Wellenleiter-Segment |
| 121 | Durchführung in der Elektronik-Kapselung |
| 122 | Schraubverbindung |
| 130 | Feder-Element |
| 131 | Messgeräte-Hals |
| 132 | Sicherungsring |
| 133 | Federring |
| 140 | Galvanische Trennung |
| a | Wellenleiter-Achse |
| d | Entfernung |
| h | Einbauhöhe |
| L | Füllstand |
| $R_{HF}$ | Reflektiertes Radar-Signal |
| $S_{HF}$ | Radar-Signal |

**Patentansprüche**

1. Radar-basiertes Füllstandsmessgerät zur Bestimmung eines Füllstandes (L) eines Füllguts (2), folgende Komponenten umfassend:

- Eine über einen hohlleiterförmigen Hochfrequenz-Anschluss (100) ansteuerbare Antennen-Anordnung (10),

  ○ mittels welcher jeweils ein Radar-Signal ($S_{HF}$) gen Füllgut (2) aussendbar ist, und
  ○ mittels welcher nach Reflektion des Radar-Signals ($S_{HF}$) an der Füllgut-Oberfläche jeweils ein Empfangs-Signal ($R_{HF}$) empfangbar ist,

- ein Hochfrequenz-Modul (11, 12, 120), mit

  ○ einer Sende-/Empfangs-Einheit (11), die ausgelegt ist, um das Radar-Signal ($S_{HF}$) zu erzeugen, und um nach dessen Reflektion an der Füllgut-Oberfläche anhand des entsprechenden Empfangs-Signals ($R_{HF}$) den Füllstand (L) zu bestimmen, mit
  ○ einer Elektronik-Kapselung (12), in dem die Sende-/Empfangs-Einheit (11) angeordnet ist, und mit
  ○ einem Hohlleiter-Segment (120), das zur Übertragung der Radar-Signale ($S_{HF}$, $R_{HF}$) derart an die Sende-/Empfangs-Einheit (11) angeschlossen ist, dass das Hohlleiter-Segment (120) aus der Elektronik-Kapselung (12) hinaus geführt wird,

- ein mit der Antennen-Anordnung (10) verbundenes Geräte-Gehäuse (13), in dem das Hochfrequenz-Modul (11, 12, 120 ) angeordnet ist, und
- ein Feder-Element (130, 133), mittels dem das Hochfrequenz-Modul (11, 12, 120) derart gegenüber dem Geräte-Gehäuse (13) vorgespannt wird, dass das Hohlleiter-Segment (120) mit einer entsprechenden Kraft in Richtung einer gemeinsamen Wellenleiter-Achse (a) gegen den Hochfrequenz-Anschluss (100) gepresst wird.

2. Füllstandsmessgerät nach Anspruch 1, wobei das Feder-Element (130, 133) als Druckfeder (130) ausgelegt ist, welche zum Vorspannen des Hochfrequenz-Moduls (11, 12, 120) innerhalb des Geräte-Gehäuses (13) an einer dem Hohlleiter-Segment (120) gegenüberliegenden Außenseite der Elektronik-Kapselung (12) angeordnet ist.

3. Füllstandsmessgerät nach Anspruch 1, wobei das Feder-Element (130, 132) als Zugfeder (133) ausgelegt ist, welche zum Vorspannen des Hochfrequenz-Moduls (11, 12, 120) innerhalb des Geräte-Gehäuses (13) an einer dem Hohlleiter-Segment (120) zugewandten Außenseite der Elektronik-Kapselung (12) angeordnet ist.

**4.** Füllstandsmessgerät nach einem der vorhergehenden Ansprüche, wobei das Feder-Element (130, 133) als Wellen-Feder (130), als Spiral-Feder, als Teller-Feder und/oder als Federring (133) ausgelegt ist.

**5.** Füllstandsmessgerät nach einem der vorhergehenden Ansprüche, wobei das Geräte-Gehäuse (13) über einen Messgeräte-Hals (131), in welchem das Hochfrequenz-Modul (11, 12, 120) angeordnet ist, mit der Antennen-Anordnung (10) verbunden ist.

**6.** Füllstandsmessgerät nach zumindest einem der vorhergehenden Ansprüche, wobei zumindest die Sende-/Empfangs-Einheit (11) innerhalb der Elektronik-Kapselung (12) mittels eines Vergusses vergossen ist.

**7.** Füllstandsmessgerät, nach einem der vorhergehenden Ansprüche, umfassend:

- zumindest ein Führungselement (14), das ausgelegt ist, das Hochfrequenz-Modul (11, 12, 120) innerhalb des Geräte-Gehäuses (13) bzw. innerhalb des Messgeräte-Halses (131) entlang der gemeinsamen Wellenleiter-Achse (a) zu führen.

**8.** Füllstandsmessgerät nach zumindest einem der vorhergehenden Ansprüche, wobei zwischen dem Hochfrequenz-Anschluss (100) und dem Hohlleiter-Segment (120) eine beidseitig formschlüssige, galvanische Trennung (140) angeordnet ist.

**Claims**

**1.** A radar-based fill level meter for determining a fill level (L) of a filling material (2), comprising the following components:

- An antenna assembly (10), which can be activated via a high-frequency connection (100) in the form of a waveguide,

o with which a radar signal ($S_{HF}$) can be sent in the direction of the filling material (2), and
∘ with which a receive signal ($R_{HF}$) can be received once the radar signal ($S_{HF}$) has been reflected on the surface of the filling material,

- a high-frequency module (11, 12, 120), with

o a transmitter/receiver unit (11), which is configured to generate the radar signal ($S_{HF}$) and, once it has been reflected on the surface of the filling material, to determine the filling level (L) based on the corresponding receive signal ($R_{HF}$), with
o electronic encapsulation (12), in which the transmitter/receiver unit (11) is arranged, and with
o a waveguide segment (120), which is connected to the transmitter/receiver unit (11) in order to transmit the radar signals ($S_{HF}$, $R_{HF}$) in such a way that the waveguide segment (120) is guided out of the electronic encapsulation (12),

- a device housing (13) connected to the antenna assembly (10), in which the high-frequency module (11, 12, 120) is arranged, and
- a spring element (130, 133), which is used to preload the high-frequency module (11, 12, 120) opposite the device enclosure (13) in such a way that the waveguide segment (120) is pressed against the high-frequency connection (100) with a corresponding force in the direction of a shared waveguide axis (a).

**2.** The fill level meter as claimed in claim 1, wherein the spring element (130, 133) is configured as a pressure spring (130), which is arranged on an outer side of the electronic encapsulation (12) opposite the waveguide segment (120) in order to preload the high-frequency module (11, 12, 120) inside the device housing (13).

**3.** The fill level meter as claimed in claim 1, wherein the spring element (130, 132) is configured as a tension spring (133), which is arranged on an outer side of the electronic encapsulation (12) facing toward the waveguide segment (120) in order to preload the high-frequency module (11, 12, 120) inside the device housing (13).

**4.** The fill level meter as claimed in one of the preceding claims, wherein the spring element (130, 133) is configured as a wave spring (130), a spiral spring, a disk spring and/or a spring washer (133).

**5.** The fill level meter as claimed in one of the preceding claims, wherein the device housing (13) is connected to the antenna assembly (10) via a measuring device neck (131), in which the high-frequency module (11, 12, 120) is arranged.

**6.** The fill level meter as claimed in at least one of the preceding claim, wherein at least the transmitter/receiver unit (11) is sealed inside the electronic encapsulation (12) using the potting compound.

**7.** The fill level meter as claimed in one of the preceding claims, comprising: At least one guide element (14), which is configured to guide the high-frequency module (11, 12, 120) inside the device housing (13) or inside the measuring device neck (131) along the shared waveguide axis (a).

8. The fill level meter as claimed in at least one of the preceding claims, wherein galvanic separation (140) with a positive connection on both sides is arranged between the high-frequency connection (100) and the waveguide segment (120).


## Revendications

1. Transmetteur de niveau radar destiné à la détermination d'un niveau (L) d'un produit (2), lequel transmetteur comprend les composants suivants :

   - un arrangement d'antennes (10) pouvant être commandé via un raccordement haute fréquence (100) en forme de guide d'ondes,

      ○ arrangement au moyen duquel un signal radar ($S_{HF}$) peut être émis vers le produit (2), et
      ○ arrangement au moyen duquel un signal de réception ($R_{HF}$) peut être reçu après réflexion du signal radar ($S_{HF}$) sur la surface du produit,

   - un module haute fréquence (11, 12, 120), avec

      ○ une unité d'émission / de réception (11), laquelle est conçue pour générer le signal radar ($S_{HF}$) et pour déterminer le niveau (L) après sa réflexion sur la surface du produit à l'aide du signal de réception ($R_{HF}$) correspondant, avec
      ○ un encapsulage électronique (12), dans lequel est disposée l'unité d'émission / de réception (11), et avec
      ○ un segment de guide d'ondes (120), lequel est raccordé à l'unité d'émission / de réception (11) pour la transmission des signaux radar ($S_{HF}$, $R_{HF}$) de telle sorte que le segment de guide d'ondes (120) est guidé hors de l'encapsulage électronique (12),

   - un boîtier d'appareil (13) relié à l'arrangement d'antennes (10), boîtier dans lequel est disposé le module haute fréquence (11, 12, 120), et
   - un élément à ressort (130, 133) au moyen duquel le module haute fréquence (11, 12, 120) est précontraint par rapport au boîtier d'appareil (13) de telle sorte que le segment de guide d'ondes (120) est pressé avec une force correspondante dans la direction d'un axe de guide d'ondes commun (a) contre le raccordement haute fréquence (100).

2. Transmetteur de niveau selon la revendication 1, pour lequel l'élément à ressort (130, 133) est conçu comme un ressort de compression (130), lequel est disposé pour précontraindre le module à haute fréquence (11, 12, 120) à l'intérieur du boîtier d'appareil (13) sur un côté extérieur de l'encapsulage électronique (12) détourné du segment de guide d'ondes (120).

3. Transmetteur de niveau selon la revendication 1, pour lequel l'élément de ressort (130, 132) est conçu comme un ressort de traction (133), lequel est, pour précontraindre le module haute fréquence (11, 12, 120), disposé à l'intérieur du boîtier d'appareil (13) sur un côté extérieur de l'encapsulage électronique (12) tourné vers le segment de guide d'ondes (120).

4. Transmetteur de niveau selon l'une des revendications précédentes, pour lequel l'élément de ressort (130, 133) est conçu comme un ressort ondulé (130), un ressort spiral, une rondelle-ressort et/ou une rondelle élastique (133).

5. Transmetteur de niveau selon l'une des revendications précédentes, pour lequel le boîtier (13) de l'appareil est relié à l'arrangement d'antennes (10) par l'intermédiaire d'un col d'appareil de mesure (131), col dans lequel est disposé le module haute fréquence (11, 12, 120).

6. Transmetteur de niveau selon au moins l'une des revendications précédentes, pour lequel au moins l'unité d'émission/de réception (11) est scellée à l'intérieur de l'encapsulage électronique (12) au moyen d'un enrobage.

7. Transmetteur de niveau selon l'une des revendications précédentes, lequel transmetteur comprend

   - au moins un élément de guidage (14), lequel est conçu pour guider le module haute fréquence (11, 12, 120) à l'intérieur du boîtier d'appareil (13) ou à l'intérieur du col d'appareil de mesure (131) le long de l'axe de guide d'ondes commun (a).

8. Transmetteur de niveau selon au moins l'une des revendications précédentes, pour lequel une séparation galvanique (140) à engagement positif des deux côtés est disposée entre le raccordement haute fréquence (100) et le segment de guide d'ondes (120).

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013108490 A1
- WO 2020120059 A1